# EUROPEAN PATENT APPLICATION

(11) **EP 4 228 306 A1**
(43) Date of publication of application: **16.08.2023**
(21) Application number: 22156570.8
(22) Date of filing: 14.02.2022
(51) Int. Cl.: H04W 12/50, H04W 12/069, H04W 12/67, H04W 12/77, H04L 9/40, H04W 84/12

(54) **EARLY INDICATION FOR CHANGING CRYPTOGRAPHIC STRENGTH DURING CONFIGURATION**

(71) Applicant: Koninklijke Philips N.V., 5656 AG Eindhoven (NL)
(72) Inventor: BERNSEN, Johannes Arnoldus Cornelis, Eindhoven (NL)
(74) Representative: Philips Intellectual Property & Standards

(57) **Abstract**

There is provided a method, commissioning and enrollee devices and a system thereof. The method is one of configuring an enrollee device for communications in a wireless network, the method be arranged for execution by a commissioning device (9) and an enrollee device (4, 5). The commissioning and enrollee devices may be arranged to communicate using a wireless communication protocol and participate in a commissioning protocol, the commissioning protocol being arranged to configure the enrollee device to communicate in the wireless network. The method comprises executing a configuration protocol, which comprises sending by the commissioning device a message comprising an indication of a selection of a type of public key, the type of public key being selected from a plurality of types of public key obtained from the enrollee device, in an out-of-band communication wherein a key of the type of public key selected is to be used for later phases of the configuration protocol and the type of public key selected is different from the type of a public key obtained from the enrollee for bootstrapping.

## Description

### FIELD OF THE INVENTION

The present invention relates to devices and methods for use in wireless networks, in particular those conforming to the IEEE 802.11 family of standards.

### BACKGROUND OF THE INVENTION

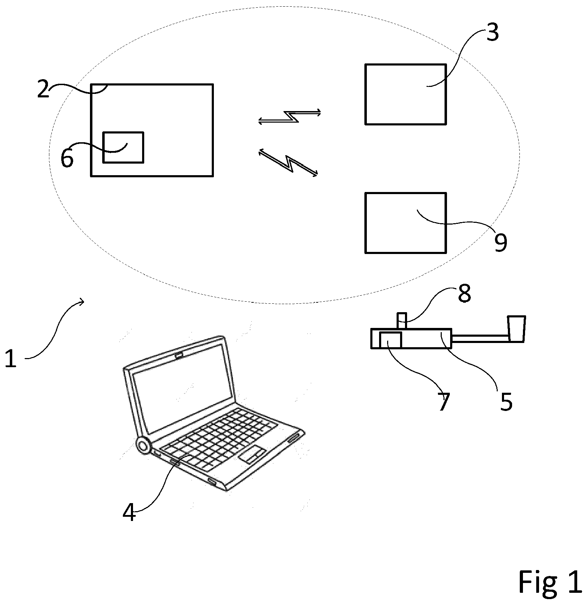

Fig. 1 represents a wireless network 1 which contains a first device 2 and another device 3. The first device 2 may have a central function and be like an Access Point (AP), a hub or a gateway device. The first device 2 will henceforth be referred to as an AP for simplicity though other types of device are indeed possible. The user (not shown) wishes to add two more devices to the network 1, namely a complex device 4 (here represented as a computer) and a simple device 5 (here represented as a toothbrush). Devices like the simple device 5 often do not have any real user interface (UI) other than perhaps a light and, accordingly, are often called 'headless' devices. The AP 2 has a processor 6 and the simple device 5 has a microcontroller and small non-volatile memory 7 and a button 8 which may be used to reset the simple device 5. There is also a third device 9. The simple device 5 may even not have a specific reset button. The wireless network uses a wireless communication technology such as one based on IEEE 802.11 though other technologies may be also suitable.

Some wireless networking standards allow for one device to configure another in order to establish a connection and communicate. This makes the task of adding, or enrolling, a new device in a network less onerous in that the user no longer has to make manual entries. The device requiring configuration in order to join the network may be called an 'enrollee' and the device performing the configuration may be called a 'commissioning device' or 'commissioner'. In the case of the Device Provisioning Protocol (DPP), which is also known as 'Wi-Fi Easy Connect^{™}', the commissioning device is called a 'Configurator' and the enrollee device an 'Enrollee'.

It is desirable that trust be established between the commissioning device, the enrollee and, ultimately, the network to which the Enrollee is destined to be connected. 'Trust' in this context can be understood as meaning that devices being configured are the intended devices and that other, malicious devices cannot intervene in the connection. To this end, the communications are often encrypted.

Diffie-Hellman, see reference document [DH], is a well-known technique for establishing a secret key between two parties, where the communication between the parties for establishing the secret key does not reveal any information to third parties on the established secret key. The two parties each use their own public/private key pair and exchange the public key with each other. Each party is able to compute the secret key using its own private key and the other party's public key and possibly some other information, e.g. a nonce (random number) from each party. Each party may generate a key pair anew each time it performs Diffie-Hellman or it reuses an older key pair.

The Device Provisioning Protocol (DPP) of the Wi-Fi Alliance, see reference document [DPP], uses Diffie-Hellman to establish a secret key between two devices, the DPP Enrollee that wants to be configured and the DPP Configurator (i.e. the commissioning device) that is able to configure DPP Enrollees, so these can get access to a DPP enabled network or can set up a DPP enabled network as an Access Point (AP), see reference document [802.11].

When performing Diffie-Hellman over a network, a device that receives a public key for performing Diffie-Hellman does not know from which device this public key is. This may be exploited by an attacker in a so-called man-in-the-middle attack. An attacker E might masquerade as the real device B with which device A wants to connect. The attacker E performs Diffie-Hellman with device A and establishes a secret key Kae with device A. Similarly, the attacker masquerades as device A to device B and establishes a secret key Kbe with device B. When a message comes in from one of the devices A or B, the attacker decrypts the message with the one secret key, encrypts it with the other and forwards it to the other device. This way, the devices A and B do not notice anything strange in their communication, except for some extra delay. When they check their communication by sending the same information using another way of communication and comparing the results, they will not notice any tampering with their communication. But the attacker has complete knowledge on what they communicate.

One way to prevent man-in-the-middle attacks and ensure trust is to use an additional protocol, a so-called Out-Of-Band (OOB) communication, for exchanging the public keys, or hashes of the public keys. The OOB communication may be a short-range wireless communication protocol such as Wi-Fi [802.11], Bluetooth [BT], 802.15.4 [802.15.4], ZigBee [ZIGBEE], Near Field Communication [NFC]. Alternatively, the OOB communication may involve the commissioning device obtaining the public keys by a technique such as scanning a QR-code associated with the enrollee device, from which it either decodes the public key(s).

In this way, the user of a device knows that the public key received OOB is from the intended device because it they can verify the association of QR-code and enrollee or because the enrollee within the operating range of the OOB communication protocol. In the case the hash of public keys is exchanged OOB, the device can check whether the public key received via the communication protocol that needs to be encrypted leads to the same hash as the hash received OOB. Note that the use of the term communication protocol in this document encompasses multiple layers of the ISO-OSI model, including the physical layer for transceiving.

By way of a concrete example, the case of an enrollee configured using the Device Provisioning Protocol (DPP) (https://www.wi-fi.org/downloads-public/Wi-Fi_Easy_Connect_Specification_v2.0.pdf/35330) will be considered. This protocol is also known under the name Wi-Fi Easy Connect.

In DPP, Elliptic Curve Cryptography [RFC 6090] is used for all asymmetric cryptography, especially the public protocol key - otherwise called the Network Access Key (NAK) - and the commissioning device signing key. The mandatory to support ECC curve is P-256. In other configuration or commissioning protocols, other forms of cryptography may be used.

Suppose an enrollee (this can be an AP or a Wi-Fi device that can associate with an AP) has been configured by a Wi-Fi Easy Connect Release 2 Configurator using ECC curve P-256 for its Network Access Key (netAccessKey or NAK). That implies that the enrollee has used a P-256 bootstrapping key, because the curve of these two must be the same in DPP R2. The commissioning device may have used a different curve than P-256 for its signing key.

The user wishes to upgrade the security of the network such that P-256 is no longer used but a stronger curve instead. This means that the AP and all devices that are allowed on its network must be newly configured. Or a user wants to create a DPP network using another preferably stronger curve than the mandatory to implement P-256, such as P-384. The curve (P-256 or other) may considered to be a 'type' of key.

The requirement of managing a security upgrade means that a way of handling the new keys/key types is needed in addition to a way for simple devices to handle the new request.

### SUMMARY OF THE INVENTION

Thus there is provided a method of configuring an enrollee device for communications in a wireless network by execution of a configuration protocol, the method being arranged to be executed by a commissioning device and an enrollee device, the commissioning and enrollee devices being arranged to communicate using a wireless communication protocol and participate in the configuration protocol, the configuration protocol comprising
- providing by the enrollee device to the commissioning device, using an out-of-band (OOB) communication, a first public key and at least one indication of a type of a second public key;
- by the commissioning device, if the at least one indication of a type of a second public key indicates a type of key different from the type of the first public key,
   making a selection of at least one type of key from the at least one indication, all types in the selection different from the type of the first public key,
   sending a first message using the wireless communication protocol, the first message requesting second public key of a type corresponding to any key type in the selection, wherein the second key is used by the commissioning device to enable the enrollee device to connect to the wireless network
      and/or
   using a third key of a type corresponding to any key type in the selection to sign a data object, the data object being arranged to be sent to the enrollee and being arranged to be used by the enrollee device to attempt to connect to the wireless network;
- by the enrollee device if requested, sending a second message containing a second public key of a type of key requested in the first message;
- completing, by the enrollee and commissioning devices, the configuration protocol using a key or keys of the type(s) corresponding to the selection.

In an aspect, when the at least one indication of a type of second public key indicates a type of key the same as that of the first public key, the at least one indication uses a data element smaller than a data element used when the at least one indication of a type of a second public key indicates a type of key different from the type of the first public key.

In this way, the volume of data to be encoded may be reduced. When the overhead of the error correction mechanism is taken into account, the saving is revealed to be even greater. This has particular advantage in the case where the OOB communication uses a QR code. In QR codes, space is at a premium and increasing the data to be encoded may increase the area required by the code. This in turn may make it difficult to fit the expanded QR code on the product or packaging.

In an aspect, the method may comprise terminating before completion of the configuration protocol, by the commissioning device, of the execution of the configuration protocol when the at least one indication of a type of a second public key only indicates the same type as the type of the first public key.

In an aspect, the method may comprise terminating before completion of the configuration protocol, by the commissioning device, of the execution of the configuration protocol when the at least one indication of a type of a second public key does not contain a type of public key that the commissioning device is enabled to use.

The commissioning device is thus able to determine the highest strength of encryption the enrollee can support. It may arise that such a strength of encryption of insufficient for the network in question. By determining this maximum encryption strength at the OOB communication phase or when the enrollee has responded with a proposed new public key, the commissioning device is able to save time and effort (on the part of a user) by failing early. It is also able to report this to the user.

In an aspect, the enrollee device is a simple device.

In an aspect, the configuration protocol is according the Device Provisioning Protocol (DPP).

There is provided, an enrollee which is arranged to communicate using a wireless communication protocol and arranged to be configured by a commissioning device for communication in a wireless network, the enrollee device being arranged to:
- participate in a configuration protocol, the configuration protocol being arranged to configure the enrollee device;
- provide, using an out-of-band (OOB) communication, a first public key for use in a first phase of the configuration protocol and at least one indication of a type of a second public key;
- participate, using the wireless communication protocol, with the commissioning device, in a commissioning protocol using the first public key and a key of a type indicated by the at least one indication;
- attempt to connect to a network as a result of being configured.

The enrollee device so arranged is able to indicate in the OOB communication phase, i.e. near the start of the configuration process, which levels or strengths of encryption it is able to support beyond that of its public bootstrapping key. This in turn permits a commissioning device which is arranged to use this facility to a) determine that enrollee can support a sufficient strength of encryption and b) select a strength of encryption (in the form of selecting one or more types of key) that the enrollee can support.

In an aspect, the enrollee device is arranged to verify a data object, the data object having been signed by the commissioning device using a key of a type corresponding to the at least one indication.

In an aspect, the enrollee comprises a transceiver and is arranged to receive, via the transceiver and using the wireless communication protocol, a first message from a commissioning device, the first message containing a request indicating one or more type(s) of second public key, the type of second public key being different from the type of the first public key and to end, via the transceiver and using the wireless communication protocol a second message to the commissioner device, the second message containing a second public key of the type requested in the message.

The enrollee is thus able to provide and use keys with higher strength encryption than that of their initial configuration i.e. that of their public bootstrapping key.

In an aspect, the enrollee device is arranged to provide a second public key of a type having the greatest cryptographic strength when the request indicates more than one type of public key.

It may be advantageous for the commissioning device to make a request containing options for the new key types. For example, a commissioning device may have to deal with many types of enrollee, some of which may advertise support for a level of encryption that is more burdensome for the enrollee than is strictly necessary. Leaving part of the choice to the enrollee may introduce some flexibility into the process. Where the request allows the enrollee to choose which key type it will use for the new (upgraded) public key, having the enrollee choose the option offering the strongest encryption allows the network to benefit from this.

In an aspect, the enrollee device is a simple device.

There is provided, a device arranged to act as a commissioning device and being arranged to configure an enrollee device for communication in a wireless network. The device comprises a transceiver arranged for transceiving according to a wireless communication protocol and device is arranged to
- participate in a configuration protocol;
- obtain, from the enrollee device, via an out-of-band (OOB) communication, a first public key and at least one indication of a second type of public key to be used as part of the configuration protocol;
- if the at least one indication indicates a type of key different from the type of the first public key,
make a selection of at least one type of key based on the at least one indication, all types in the selection being different from the type of the first public key,
send a first message, using the transceiver and the wireless communication protocol, to the enrollee device requesting a second public key of a type of key corresponding to any key type in the selection and/or
use a third key of a type corresponding to any key type in the selection to sign a data object and to send, via the transceiver and using the wireless communication protocol, the signed data object to the enrollee, the data object being arranged to be used by the enrollee device to attempt to connect to the wireless network.

The commissioning device is thus able to determine which types of key, other than that of the enrollee bootstrapping key, the enrollee is able to support. With that information it is able to either request a new public key from the enrollee. Additionally or alternatively, it is able to determine which key type (different from that of the enrollee bootstrapping key) it may use to sign the data object containing the connection information packet (e.g. DPP Connector). By determining what it may use, the commissioning device may make changes in the encryption level without having to resort to trial and error.

In an aspect, the device is arranged to terminate before completion the configuring of the enrollee device if the indication indicates only the same type of key as the type of key of the first public key.

In an aspect, the device is arranged to terminate before completion the configuring of the enrollee device if the at least one indication does not indicate a type of key the device is enabled to use.

There are also provided a computer program product when operated on a processor in an enrollee device causes the enrollee device to execute the method described herein and a computer program product when operated on a processor in a commissioning device causes the commissioning device to execute the method described herein.

### BRIEF DESCRIPTION OF THE DRAWINGS

The above, as well as additional objects, features and advantages of the disclosed devices, systems and methods, will be better understood through the following illustrative and non-limiting detailed description of embodiments of devices and methods, with reference to the appended drawings, in which:
Fig. 1 represents a wireless network for which it is desired to configure devices for addition.
Fig. 2 represents the flow of a configuration process.
Fig. 3 represents the flow of a reconfiguration process according to an embodiment.
Fig. 4 shows a representation of a QR code.
Fig. 5a shows a computer readable media.
Fig. 5b shows in a schematic representation of a processor system.

The figures are purely diagrammatic and not drawn to scale. In the Figures, elements which correspond to elements already described may have the same reference numerals.

### DETAILED DESCRIPTION OF EMBODIMENTS

In the following description, same references designate like elements.

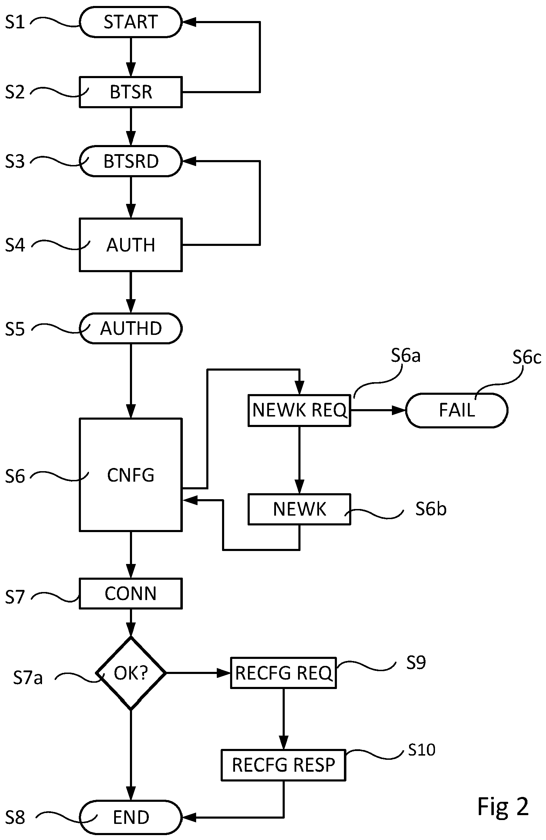

Fig. 2 represents a flow of a device-controlled configuration whereby one device such as the third device 9 of fig. 1 may configure and connect to another device such as the complex or simple devices 4, 5 of fig. 1. The process of Fig. 2 may be referred to as a commissioning or configuration protocol. As an example, the case of the simple device 5 will be discussed. It should be understood, that though much of this description provides examples involving a network with a device like the AP 2, the process could work in a peer-to-peer situation. This configuration flow may be used for configuring a device which is in an un-configured state or is not yet able to connect.

One example of a device-controlled configuration method is the Device Provisioning Protocol (DPP) which is used in networks using Wi-Fi or IEEE 802.11. In the Device Provisioning Protocol (DPP), a device acting as a DPP Configurator can securely configure any Wi-Fi enabled device for connecting to a Wi-Fi AP.

At S 1 (Start), the process starts with the two devices 9 and 5 in an unconnected state and device 5 is un-configured. For the purposes of discussion, device 9 will be used to configure device 5 for joining the wireless network 1 so device 9 may be referred to as the commissioning device (e.g. DPP Configurator) and device 5 as the enrollee (since it is being 'enrolled' in the wireless network 1).

At S2 (Bootstrapping), often referred to as 'bootstrapping', whereby one device, the Initiator, obtains the bootstrapping public key (B_{R}) of the other device, the Responder. When mutual authentication is desired by the Responder device, it too obtains the bootstrapping public key (B_{I}) of the Initiator. This is achieved by another means than the wireless communication technology and so is commonly called 'out-of-band' communication (OOB). Examples of this can be the user causing one device to read a QR code on the Responder, NFC communication between the two device or another wireless technology e.g. Bluetooth. The bootstrapping process is initiated by a user intervention. If the bootstrapping has been successful, the process arrives as S3 (Bootstrapped) and the devices 9, 5 are 'bootstrapped', otherwise they revert to the 'start' state at S1. In either case, the enrollee device (in this case the simple device 5) may record in an appropriate storage, for example as a flag in a register in memory, the result of the bootstrapping process. Frequently, simple devices are programmed to wake up after manufacturing or after a reset and turn on their radio on the channel indicated in their QR-code for configuration and start listening for an authentication request message

At S4 (Authentication), the devices 9, 5 perform an authentication procedure whereby the devices establish 'trust' i.e. the user is able to be confident that the devices are what they believe them to be and not other unknown (and potentially malicious) devices 'pretending' to be one or other of the devices in question. A message is sent from one device requesting to start an authentication. This message can be sent by either the device doing the configuring (commissioning device or Configurator - in the case of DPP) or the device to be configured, the enrollee. In this example, the third device 9 acts as the commissioning device and the simple device 5 as the enrollee. It should be noted that the third device 9 is shown as being connected to the network 1 though this is not necessarily required for the embodiments to work. The device starting the wireless communication is called the Initiator and the device responding is called the Responder. The DPP protocol, in particular, allows both a commissioning device and an enrollee device to act as the Initiator of the DPP protocol, whereby the other device automatically becomes the Responder. Simple devices or headless device usually will assume the Responder role.

The other device responds to this message. If the authentication request message is decoded correctly and contains the information indicating that the Initiator is the device the Responder device believes it to be and has the required capabilities, the response message indicates that the message has been 'accepted' and contains information needed by the Initiator to verify the credentials of the Responder and that it too has the required capabilities. If the two devices do not receive from the other device the required information, the process aborts and the device return to the bootstrapped state at S3 or to the start state S1. If the Initiator is the enrollee, the authentication request message may also contain an additional part indicating the result of a previous attempt to configure the enrollee. If the Responder is the enrollee, then the authentication response message may contain the additional part indicating the result of the previous attempt. It should be understood that the indication may also indicate whether or not there has been a previous attempt. In these authentication messages, both devices supply information with which they prove that they possess the private keys belonging to their public keys, which public keys have been obtained by the other device. Proving possession of a private key can be done by successfully deriving the same symmetric key in a Diffie-Hellman procedure, or by both devices computing the same authentication value, such as I-Auth and R-Auth in DPP.

In the case of the DPP protocol, the first message is the Authentication Request and the response message is the DPP Authentication Response. The Responder checks the DPP Authentication Request message contains a correctly generated cryptographic hash of the Responder public bootstrapping key and whether it has a copy of the Initiator's public bootstrapping key. The responder sends a DPP Authentication Response message indicating whether the authentication can continue. If not, because for example the attempt to decrypt an encrypted nonce in the DPP Authentication Request message fails, the process is aborted. The DPP Authentication Response contains a cryptographic hash of the Responders public bootstrapping key and may contain the hash of the Initiator public bootstrapping key. Likewise, for the Initiator, the enrollee may have obtained this public key by an OOB communication. The public bootstrapping key of the Initiator may then be used for mutual authentication. Without the public bootstrapping key of the Initiator, only the Initiator can authenticate the enrollee 5, but not the other way around.

If the authentication response message indicates that the Responder has accepted the authentication request message and the response meets the criteria imposed by the set-up of the Initiator, the Initiator issues an authentication confirmation message. If the authentication values in the authentication response and the confirmation message are found to be correct by the relevant devices, this part of the protocol, the authentication part, is successful, the process has reached S5 (Authenticated) and configuration can start. The confirmation message may also contain an indication of the result of a previous configuration attempt where the enrollee is also the Initiator.

In the case of the DPP protocol, the authentication confirmation message is the DPP Authentication Confirm message.

At S6 (Configuration), the enrollee sends a configuration request message with information on what type of configuration the enrollee wants. If the commissioning device is able to grant the request, it sends a message with the information needed by the enrollee such as a network key. In a variant, the configuration request may also contain an indication of the result of a previous configuration attempt.

In the case of DPP, the request message is the DPP Configuration Request and the commissioning devices response is the DPP Configuration Response message. The response from the commissioning device (e.g. the DPP Configuration Response) may contain the service set identifier (SSID) of the network the enrollee should connect to and may contain a data object which may serve as 'connection information package'. In the case of DPP, this is called a DPP Connector. For the sake of convenience, this connection information package will be referred to as a 'Connector'. It should be understood that this does not limit the system and methods described herein to DPP - indeed other commissioning protocols may use a Connector. The Connector, at least in the case of DPP. is digitally signed by the commissioning device using a key (the C-sign key) and contains among other thing the public network access key of the enrollee - the NAK. The enrollee may then verify the contents of the connection information package, using the signing key, in order to continue.

The commissioning device may have obtained the public network access key of the enrollee from the message sent by the enrollee at the end of authentication (the DPP Authentication Response message in the case of DPP) and in which message this key is called the public protocol key of the Responder. Note that in this application the term protocol key is used not just for the protocol key in the DPP protocol, but also for any other enrollee public key that is used in any commissioning protocol and/or any protocol to connect to the network based on a successful commissioning of the enrollee. After successful DPP Authentication, the public protocol key of the Responder gets renamed to public network access key of the enrollee to indicate its new purpose in the protocol. The DPP Configuration Response message also contains the public signing key of the configuration. Other devices that have been configured by the same commissioning device 9 (e.g. DPP Configurator) can thereby check whether they can trust the public network access key of other devices. Thus an enrollee attempting to connect to the network may use the signature on its Connector that contains its NAK to gain acceptance by the network or by other devices in the network. The DPP Configuration Response message may also contain the Wi-Fi passphrase or Pre-Shared Key (PSK) of the network. The enrollee sends a message to the commissioning device (e.g. a DPP Configuration Result, depending on the version of DPP) to the commissioning device (e.g. DPP Configurator) to let it know whether it accepts the configuration or not. Not receiving this message by the commissioning device may indicate to the commissioning device that there was a Wi-Fi problem between the commissioning device and the enrollee. Then the 'supposedly configured' enrollee can send its Connector to a DPP configured AP 2. If the Connectors signature is found correct and if the AP 2 has a matching Connector, i.e. a Connector for the same network, signed by the same commissioning device, the AP2 sends its own Connector to the enrollee (e.g. DPP Enrollee). The enrollee and the AP 2 can compute a symmetric key based on each other's network access key in the Connectors and their own private network access key in Diffie-Hellman fashion.

At S7 (Connection), the enrollee 4 or 5 attempts to connect to the network. In case of Wi-Fi, the enrollee will have received a Wi-Fi password or Wi-Fi Pre Shared key (PSK), with which the enrollee tries to associate with the AP 2 in the normal way through the 4-way handshake as specified in [802.11]. If the connection attempt is successful, the flow passes to S8 (Complete) where it is complete.

In the case of DPP, the actual public keys, e.g. a particular P-256 key, when they are transferred in a message usually contain the type of public key in the structure that contains the public key. An example of an elliptic curve public key represented as the ASN.1 structure called SubjectPublicKeyInfo as specified in section 4.1 of [RFC 5280] is the following in ASN.1 notation:

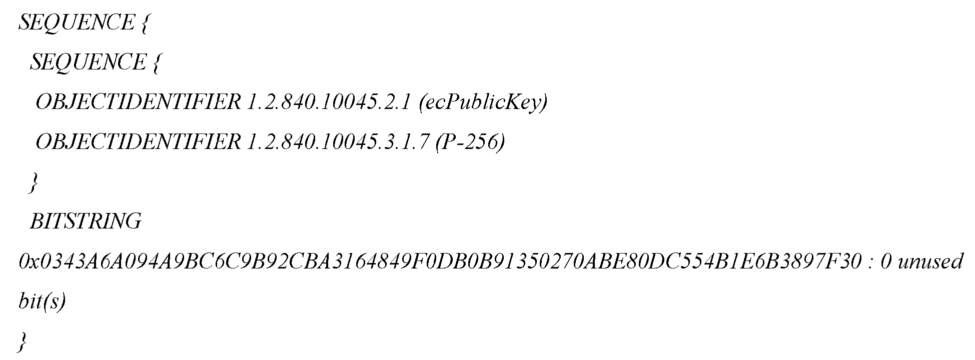

Both OBJECTIDENTIFIERs together define the type of public key, while the BITSTRING contains the value of this particular public key.

Currently, and particularly in DPP, in terms of information on the public keys of the enrollee device, the bootstrapping URI contains only the bootstrapping key in DPP R2. This bootstrapping key is the last attribute in the bootstrapping URI. It is of the form:
*"K:MDkwEwYHKoZIzjOCAQYIKoZIzj0DAQcDIgADM2206avxHJaHXgLMkql24e0rsrfMP9K1Tm8gx*+*o vPOI*=*;*", where the symbols between the ":" and ";" characters are the base64 encoded ASN.1 SEQUENCE SubjectPublicKeyInfo from [RFC 5280]. Decoding and pretty printing the bootstrapping key representation in the example above yields:

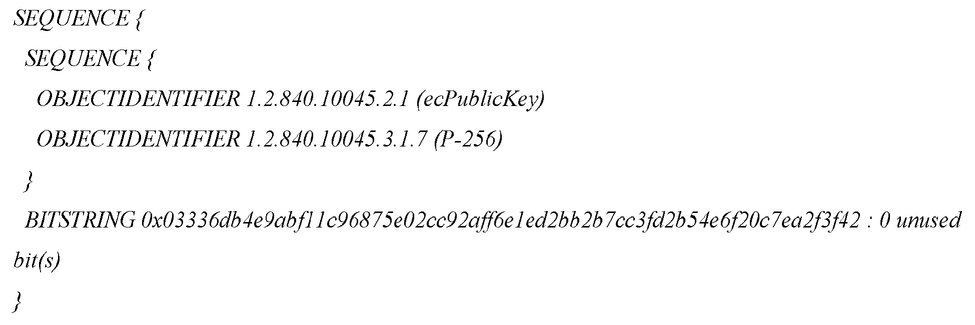

In DPP, Elliptic Curve Cryptography [RFC 6090] is used for all asymmetric cryptography, especially the Network Access Key (NAK) and the commissioning device (Configurator) signing key, but other forms of asymmetric cryptography, such as the multiplicative group of integers modulo q as described in [DH] where q is prime (referred to in [DH] as "a finite field *GF(q)* with a prime number *q* of elements), and α is a primitive root modulo *q* (referred to in [DH] as "a fixed primitive element of *GF(q)),* are also possible. All public keys generated with the same value *of q* and *α,* are considered the same type of public key for the purposes of the present document. Likewise, all public keys that are points on the same elliptic curve are also considered to be of the same type. Public keys that use a different encryption algorithm, e.g. ECC and the multiplicative group of integers modulo q, are considered as different types of public keys. Public keys that use the same encryption algorithm but for which at least one of the defining parameters has a different value are considered a different type of public key for the purposes of the present document. For example, defining parameters are q and *α* for the multiplicative group of integers modulo q and the elliptic curve is a defining parameter for the ECC algorithm. In addition to using the OBJECTIDENTIFIERs shown in the above examples, an indication of an elliptic curve can also be given or obtained using an element *group* which contains the Finite Cyclic Group attribute as specified in clause 8.1.1.12 "Finite Cyclic Group attribute" of [DPP], using the registry maintained by IANA as "Group Description" attributes for IETF RFC 2409 [RFC 2409] and [IKE]. E.g., the IANA representation in [IKE] of curve P-256 is 1300. E.g. in the DPP Reconfiguration Announcement message, the element group indicates the type of public key of the Network Access Key in the Connector of the enrollee.

It should be understood that the above paragraph describes the situation in DPP. However, other commissioning protocols may have similar aspects and analogous elements (network access keys etc.).

It should be noted for the purposes of the present disclosure that selecting, comparing, providing, obtaining, receiving, etc. a type of public key is also accomplished when selecting, comparing, providing, obtaining, receiving, etc. a structure, or a blob of data that comprises a public key and the type of public key of that public key. Examples of such structures or blobs of data are been presented herein.

Currently, and in particular in the current version of DPP, the bootstrapping URI can contain only one bootstrapping key. This bootstrapping key is the last attribute in the bootstrapping URI. It is of the form:
"K:MDkwEwYHKoZIzj0CAQYIKoZIzj0DAQcDIgADM2206avxHJaHXgLMkq/24e0rsrfMP9K1Tm8g x+ovP0I=;", where the symbols between the ":" and ";" characters are the base64 encoded ASN.1 SEQUENCE SubjectPublicKeyInfo from [RFC 5280]. Decoding and pretty printing the bootstrapping key representation in the example above yields:

```
 SEQUENCE {
 SEQUENCE {
  OBJECTIDENTIFIER 1.2.840.10045.2.1 (ecPublicKey)
  OBJECTIDENTIFIER 1.2.840.10045.3.1.7 (P-256)
 }
 BITSTRING 0x03336db4e9abf11c96875e02cc92aff6e1ed2bb2b7cc3fd2b54e6f20c7ea2f3f42 : 0 unused
 bit(s)
 } 
```

The inventor has realized that this has a disadvantage for the efficient operation of the configuration protocol.

Much attention is accorded to questions of privacy and protection from cyber-attacks. A principal part of defenses against such attacks is the strength of the cryptography and there is a trend to increase the strength of the cryptography. Thus the situation may arise where the commissioning device finds, from the initial information from the enrollee (e.g. the bootstrapping URI and early exchanges), that the enrollee device is arranged to use cryptography of a lower strength than it, the commissioning device, 'desires' (i.e. is programmed or enabled) to use. Indeed, with many older potential enrollee devices, having older and weaker cryptography, hanging around, as it were, in supply chains, the situation is quite likely to occur - the problem may be more pressing that may have been understood.

Furthermore, the inventor has realized that there is a follow-on problem. The configuration protocol may allow, and indeed DPP does provide for, the commissioning device to change to a higher strength cryptography for later phases of the configuration protocol and the connection of the enrollee to the wireless network. In the case of DPP, at S6a, the DPP Configurator (i.e. the commissioning device) may use the DPP Configuration Response message to request a new public protocol key (NEWK REQ) on a particular (presumably) stronger curve. At S6b, if the enrollee is able to use the proposed curve, it replies with message (e.g. a DPP Configuration Request, in the case of DPP) containing the new public protocol key. The flow then continues to S7 as described above. However, if the enrollee is not able to comply, it fails the respond and eventually the configuration process terminates after a timeout with a configuration failure at S6c (FAIL). The commissioning device is left hanging, as it were, and will eventually inform the user of the failure to complete the configuration. The only option left to the user then is to recommence the procedure. This flow of events wastes time. More, undesirably, the commissioning device must start again 'blind' - assuming it tries a request for a new key asking for a different type of key that it has just requested, it does not know ahead of time whether this will succeed either. In short, the only option is trial and error i.e. to run the configuration procedure repeatedly until it works.

A similar situation may occur when the commissioning device wants to use a private key of another type than the type of key of the bootstrapping key provided by the enrollee, e.g. a more secure type. The commissioning device may send a configuration response of which (part of) the information, e.g. a DPP Connector, is signed with a private key of a different type than the type of key of the bootstrapping key provided by the enrollee. However, if the enrollee is not able to comply, it fails the respond and eventually the configuration process terminates in step 6 and the commissioning device is left hanging, as before.

According to embodiments, the bootstrapping URI may be extended such that additional elliptic curves can be added in a backwards compatible fashion. This can be done with a series of one or more attributes appearing anywhere before and all similar to the existing attribute indicated by "K" in the DPP bootstrapping URI, but now indicated with another, unused, character.

Several variants are possible.

In one variant, there is included an Indication in one list all the types of key (i.e. elliptic curves in the case of DPP), other than the one of the bootstrapping key in the bootstrapping URI, that the device to which the bootstrapping URI belongs supports for commissioning device to use as signing key and for use as a protocol key (Network Access Key).

In another variant, there is an indication in two separate list all the key types (e.g. elliptic curves), other than the one of the bootstrapping key in the bootstrapping URI, that the device to which the bootstrapping URI belongs supports for commissioning device (Configurator) signing and for use as a Network Access Key.

Using the ASN.1 der encoding of

```
 SEQUENCE{
   OBJECTIDENTIFIER 1.2.840.10045.2.1 (ecPublicKey)
   OBJECTIDENTIFIER 1.3.132.0.34 (P-384)
  }
```

which is
*MBAGByqGSM49AgEGBSuBBAAi* in BASE64 encoding.

Support for P-384 for both signing and protocol keys/Network Access Keys may be indicated in the following way, where 'B' may mean 'both':
*B:MBAGByqGSM49AgEGBSuBBAAi;*

In the case of DPP, the bootstrapping URI may then become:
*DPP:BMBAGByqGSM49AgEGBSuBBAAi;K:MDkwEwYHKoZIzj0CAQYIKoZIzj0DAQcDIgADM2206av xHJaHXgLMkg*/*24e0rsrfMP9K1Tm8gx*+*ovP0I*=*;;*

Other information can be added in the bootstrapping URI as well, for example the channel(s) the enrollee will be listening on.

The above ASN.1 notation is quite lengthy. This has the disadvantage that it may increase the size of a QR code containing the bootstrapping URI to such an extent that there is not enough space left on a product to print the QR code on it. An advantageous way may be to use the codings in the IANA maintained registry mentioned above. Indicating support for a P-384 signing key separately from indicating support for a P-521 NAK could then be done as follows, where 'S' may indicate signing key types and 'N' may indicate NAK key types:
*DPP:S:1400;N:1500;K:MDkwEwYHKoZIzj0CAQYIKoZIzj0DAQcDIgADM2206avxHJaHXgLMkq*/*24e0r srfMP9K1Tm8gx*+*ovP0I*=*;;*

Support for two curves for both signing and NAK use could be done as follows:
*DPP:B:14001500;K:MDkwEwYHKoZIzj0CAQYIKoZIzj0DAQcDIgADM2206avxHJaHXgLMkq*/*24e0rsrf MP9K1Tm8gx*+*ovP0I*=*;;*
or
*DPP:B:1400;B:1500;K:MDkwEwYHKoZIzj0CAQYIKoZIzj0DAQcDIgADM2206avxHJaHXgLMkq*/*24e0r srfMP9K1Tm8gx*+o*vP0I*=*;;*

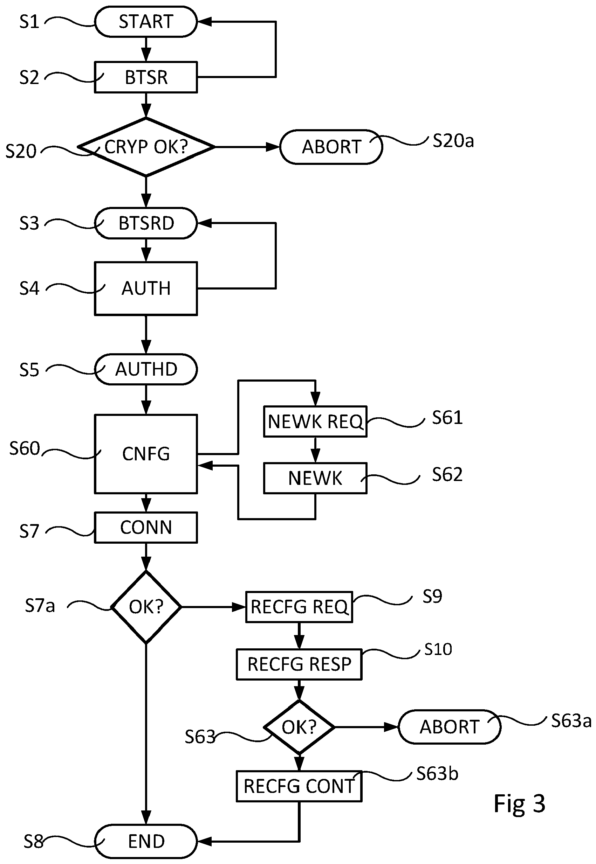

Fig. 3 represents a flow of a protocol for upgrading the encryption (i.e. increasing the cryptographic strength) according to an embodiment. The process at S1, S2, S3, S4, S5, S7, S7a and S8 are as described with reference to fig. 2 and so are not described further. The process of Fig. 3 may also be referred to as a commissioning or configuration protocol.

At S20, the commissioning device inspects the information it has received from the enrollee at S2 - for example, in a bootstrapping URI. If the commissioning device 'wants' to use the type of key (e.g. curve) of the bootstrapping also for Connector signing and for the NAK for network access, it continues the process to S3.

However, if the commissioning device wants to use another type of key (e.g. curve) for later phases the protocol (such as signing DPP Connectors or for a protocol key such as a NAK) than that of the bootstrapping key in the bootstrapping URI, it tries to locate the information on which curve(s) the enrollee supports for signing. In the examples above, this would be the information after "B:", "N:" or "S:" and before the following semicolon. If the commissioning device finds a type of key (e.g. curve) that it can accept, then the process continues to S3. The commissioning device may then keep a record of bootstrapping URI for later use, e.g. in the case a reconfiguration is required.

However, if the enrollee does not support a curve (i.e. type of key) that the commissioning device can accept to use, supports or is enabled to use, the commissioning device stops the process of configurating this enrollee and the process is aborted at S20a. The commissioning device may then inform the user of the fact that the enrollee appears not to support an acceptable type of key.

At S61, the commissioning device may select one or more key type(s) (e.g. curve) from the information in the bootstrapping URI and request the enrollee to provide a public protocol key of any of the selected type(s). The enrollee may then respond at S62 with a new protocol key (e.g. NAK) of (one of) the type(s) requested. It may be advantageous for the enrollee to be configured to use the strongest type of key when presented with a request allowing for more than one type of public key. The commissioning device then knows that the enrollee will be using an acceptable level of encryption when it connects to the network. Since the commissioning device has made the selection from a list that, in theory, the enrollee supports, the risk that the enrollee is unable to use the signing key to verify the connection information package and so fails to respond (causing the process to hang and then abort) is much reduced. This offers a significant improvement in the efficiency of the commissioning process in the wasteful trial and error commissioning device trying to 'guess' a suitable key type for signing and public protocol keys is removed and those enrollees which cannot be connected are eliminated early.

It may be advantageous for the commissioning device to make a request containing options for the new key types. For example, a commissioning device may have to deal with many types of enrollee, some of which may advertise support for a level of encryption that is more burdensome for the enrollee than is strictly necessary in a given situation. Leaving part of the choice to the enrollee may introduce some flexibility into the process. Where the request allows the enrollee to choose which key type it will use for the new (upgraded) public protocol key, having the enrollee choose the option offering the strongest encryption allows the network to benefit from this.

At S60, in addition to or alternatively to requesting the enrollee at S61 to provide a public protocol key of a key type (e.g. curve) from the information in the bootstrapping URI, the commissioning device may select a key type (e.g. curve) from the information in the bootstrapping URI, other than the key type of the bootstrapping key in the bootstrapping URI, to sign a connection information packet (e.g. DPP Connector) with. The commissioning device then knows that it can sign the connection information packet (e.g. DPP Connector) with a supported key type. The enrollee may then use the signature of the connection information package to gain acceptance from the network when it attempts to connect the network. In case the commissioning device also requested a new public protocol key, the type of key for the signing the connection information packet with may be the same or different than the one of the requested public protocol keys. Since the commissioning device has made the selection from a list that, in theory, the enrollee supports, the risk that the enrollee fails to respond (causing the process to hang and then abort) is much reduced. This offers a significant improvement in the efficiency of the commissioning process in the wasteful trial and error commissioning device trying to 'guess' a suitable key type for signing and public protocol keys is removed and those enrollees which cannot be connected are eliminated early.

Enrollees may need reconfiguring even when they have been connected to the network. For example, this operation may be performed in order to upgrade the cryptographic security of the network and will thus require a change of key type. Another situation is where the enrollee has attempted and failed to connect to network, as represented by S7a. The inventor has realized that such a reconfiguring may suffer from the same problems when the commissioning device does not know which key types (e.g. curves) are supported by the enrollee in question.

Reconfiguration of an enrollee may be performed according to an embodiment. In an advantageous implementation, the commissioning device stores the bootstrapping URIs of all enrollees it has configured in combination with the NAK it has configured each enrollee with. At S9, An enrollee requires reconfiguring and starts sending request messages such as DPP Reconfiguration Announcement messages. A commissioning device such as DPP Configurator that recognizes the hash of its signing key in the DPP Reconfiguration Announcement messages replies with a DPP Reconfiguration Authentication Request message to the enrollee. In the case of DPP, the commissioning device may learn the identity of the enrollee during the DPP Reconfiguration Authentication protocol when it has received the DPP Reconfiguration Authentication Response message from the enrollee, which message contains the enrollee Connector and the enrollee NAK. This establishing of the enrollee identity may occur as follows

At S10, the enrollee replies with a response (such as the DPP Reconfiguration Authentication Response message) and includes its (enrollee) Connector. The commissioning device locates the NAK in the enrollee Connector in the received (DPP Reconfiguration Authentication Response) message. Then, the commissioning device may try to locate this NAK in its list of NAKs it has used in Connectors to configure enrollees previously. When it finds the NAK in that list, it locates the bootstrapping URI that the enrollee used when it was configured with a Connector using that NAK. At S63, the commissioning device may then evaluate the key types (e.g. curve) supported by this enrollee as described above. The commissioning device may decide to either abort the reconfiguration procedure at S63a or to proceed with reconfiguring this enrollee at S63b, because it supports curve(s) that the commissioning device wants to use. In some commissioning protocols, S63b may be presented as comprising S60, S61, S62, and S7. After reconfiguring successfully, the process terminates at S8, as before.

Thus the method of configuring an enrollee device for communications in a wireless network by execution of a configuration protocol may be described as follows. The method is arranged to be executed by a commissioning device and an enrollee device, the commissioning and enrollee devices being arranged to communicate using a wireless communication protocol and participate in the configuration protocol. The configuration protocol comprises the following elements. The enrollee device provides to the commissioning device, using an out-of-band (OOB) communication, a first public key and at least one indication of a type of a second public key. The commissioning device, if it determines that the at least one indication of a type of a second public key indicates a type of key different from the type of the first public key, does the following things.

The commissioning device makes a selection of at least one type of key from the at least one indication, all types in the selection different from the type of the first public key and sends a first message using the wireless communication protocol, the first message requesting second public key of a type corresponding to any key type in the selection, wherein the second key is used by the commissioning device to enable the enrollee device to connect to the wireless network.

Either additionally or alternatively, the commissioning device uses a third key of a type corresponding to any key type in the selection to sign a data object, the data object being arranged to be sent to the enrollee and being arranged to be used by the enrollee device to attempt to connect to the wireless network.

The enrollee device if requested, sends a second message containing a second public key of a type of key requested in the first message. Then, the enrollee and commissioning devices, complete the configuration protocol using a key or keys of the type(s) corresponding to the selection - by using one or more of a public key of the enrollee and a signing key of the commissioning device.

When the indication of a type of second public key indicates a type of key the same as that of the first public key, the indication may use a data element smaller than a data element used when the indication of a type of a second public key indicates a type of key different from the type of the first public key.

In this way, the volume of data to be encoded may be reduced. When the overhead of the error correction mechanism is taken into account, the saving is revealed to be even greater. This has particular advantage in the case where the OOB communication uses a QR code. In QR codes, space is at a premium and increasing the data to be encoded may increase the area required by the code. This in turn may make it difficult to fit the expanded QR code on the product or packaging.

Thus the method may comprise terminating before completion of the configuration protocol, by the commissioning device, of the execution of the configuration protocol when the at least one indication of a type of a second public key only indicates the same type as the type of the first public key. The method may comprise terminating before completion of the configuration protocol, by the commissioning device, of the execution of the configuration protocol when the at least one indication of a type of a second public key does not contain a type of public key that the commissioning device is enabled to use.

The commissioning device is thus able to determine the highest strength of encryption the enrollee can support. It may arise that such a strength of encryption of insufficient for the network in question. By determining this maximum encryption strength at the OOB communication phase or when the enrollee has responded with a proposed new public key, the commissioning device is able to save time and effort (on the part of a user) by failing early. It is also able to report this to the user.

The enrollee according to an embodiment is arranged to communicate using a wireless communication protocol and arranged to be configured by a commissioning device for communication in a wireless network. The enrollee device is arranged to:
- participate in a configuration protocol, the configuration protocol being arranged to configure the enrollee device;
- provide, using an out-of-band (OOB) communication, a first public key for use in a first phase of the configuration protocol and at least one indication of a type of a second public key;
- participate, using the wireless communication protocol, with the commissioning device, in a commissioning protocol using the first public key and a key of a type indicated by the at least one indication;
- attempt to connect to a network as a result of being configured.

The enrollee device so arranged is able to indicate in the OOB communication phase, i.e. near the start of the configuration process, which levels or strengths of encryption it is able to support beyond that of its public bootstrapping key. This in turn permits a commissioning device which is arranged to use this facility to a) determine that enrollee can support a sufficient strength of encryption and b) select a strength of encryption (in the form of selecting one or more types of key) that the enrollee can support.

According to an embodiment, the enrollee device is arranged to verify a data object, the data object having been signed by the commissioning device using a key of a type corresponding to the at least one indication.

The enrollee may comprise a transceiver and may be arranged to receive, via the transceiver and using the wireless communication protocol, a first message from a commissioning device, the first message containing a request indicating one or more type(s) of second public key, the type of second public key being different from the type of the first public key and to end, via the transceiver and using the wireless communication protocol a second message to the commissioner device. This second message may contain a second public key of the type requested in the message.

The enrollee is thus able to provide and use keys with higher strength encryption than that of their initial configuration i.e. that of their public bootstrapping key.

In an embodiment, the enrollee device is arranged to provide a second public key of a type having the greatest cryptographic strength when the request indicates more than one type of public key. It may be advantageous for the commissioning device to make a request containing options for the new key types. For example, a commissioning device may have to deal with many types of enrollee, some of which may advertise support for a level of encryption that is more burdensome for the enrollee than is strictly necessary. Leaving part of the choice to the enrollee may introduce some flexibility into the process. Where the request allows the enrollee to choose which key type it will use for the new (upgraded) public key, having the enrollee choose the option offering the strongest encryption allows the network to benefit from this.

A commissioning device according to an embodiment is arranged to configure an enrollee device for communication in a wireless network. The device comprises a transceiver arranged for transceiving according to a wireless communication protocol and device is arranged to
- participate in a configuration protocol;
- obtain, from the enrollee device, via an out-of-band (OOB) communication, a first public key and at least one indication of a second type of public key to be used as part of the configuration protocol;
- if the at least one indication indicates a type of key different from the type of the first public key,
make a selection of at least one type of key based on the at least one indication, all types in the selection being different from the type of the first public key,
send a first message, using the transceiver and the wireless communication protocol, to the enrollee device requesting a second public key of a type of key corresponding to any key type in the selection and/or
use a third key of a type corresponding to any key type in the selection to sign a data object and to send, via the transceiver and using the wireless communication protocol, the signed data object to the enrollee, the data object being arranged to be used by the enrollee device to attempt to connect to the wireless network.

The commissioning device is thus able to determine which types of key, other than that of the enrollee bootstrapping key, the enrollee is able to support. With that information it is able to either request a new public key from the enrollee. Additionally or alternatively, it is able to determine which key type (different from that of the enrollee bootstrapping key) it may use to sign the data object containing the connection information packet (e.g. DPP Connector). By determining what it may use, the commissioning device may make changes in the encryption level without having to resort to trial and error.

The device may be arranged to terminate before completion the configuring of the enrollee device if the indication indicates only the same type of key as the type of key of the first public key. Additionally or alternatively, he device may be arranged to terminate before completion the configuring of the enrollee device if the at least one indication does not indicate a type of key the device is enabled to use.

There are also provided a computer program product when operated on a processor in an enrollee device causes the enrollee device to execute the method described herein and a computer program product when operated on a processor in a commissioning device causes the commissioning device to execute the method described herein.

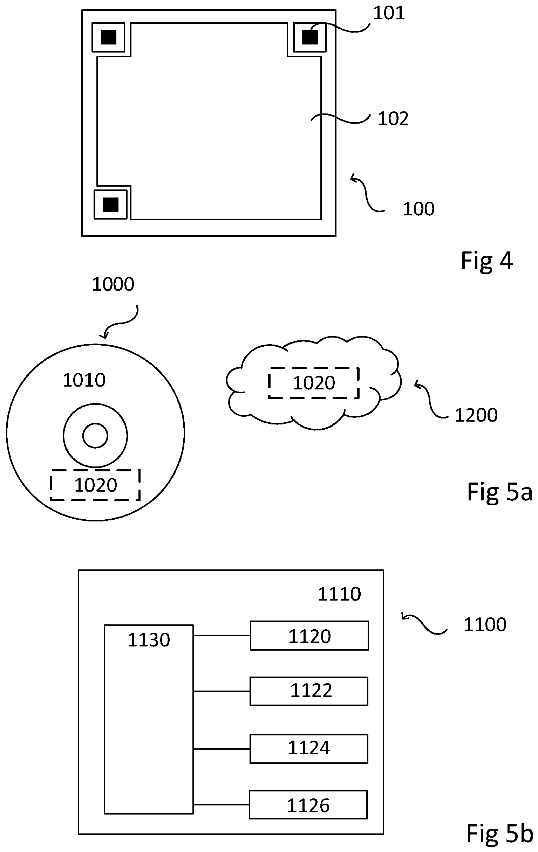

Fig. 4 represents a QR code as may be used in the bootstrapping phase of S2 described above. The International Organization for Standardization (ISO) has established a standard ISO/IEC18004:2015 for the QR code entitled: "Information technology - Automatic identification and data capture techniques - QR code bar code symbology specification", which defines the standardized symbol structure. There are 40 versions with different information capacities. The QR code 100 has various component areas such as finder patterns 101 and a data and error correction area 102. The data is encoded as a bit stream which is divided into 8-bit codewords. Error correction mechanisms are employed which further increase the actual amount of encoded data stored in the printed code. Increasing the amount of information in a QR code may significantly increase the size of the printed QR code which may present problems for actually fitting the QR code in the available space on the device or packaging. Thus, there is an advantage to saving space. In an embodiment, where the enrollee only supports the key type (e.g. curve) of its public bootstrapping key, the indication of supported key types for the signing and/or public protocol keys (i.e. NAK) are removed. Thus
*DPP:B:1300;K:MDkwEwYHKoZIzj0CAQYIKoZIzj0DAQcDIgADM2206avxHJaHXgLMkq*/*24e0rsrfMP9 K1Tm8gx*+*ovP0I*=*;;*
becomes
*DPP:B:;K:MDkwEwYHKoZIzj0CAQYIKoZIzj0DAQcDIgADM2206avxHJaHXgLMkq*/*24e0rsrfMP9K1T m8gx*+*ovP0I*=*;;* And
*DPP:S:1400;N:1500;K:MDkwEwYHKoZIzj0CAQYIKoZIzj0DAQcDIgADM2206avxHJaHXgLMkq*/*24e0r srfMP9K1Tm8gx*+*ovP0I*=*;;*
becomes
*DPP:S:;K:MDkwEwYHKoZIzj0CAQYIKoZIzj0DAQcDIgADM2206avxHJaHXgLMkq*/*24e0rsrfMP9K1Tm 8gx*+*ovP0I*=*;;*

This saves four or eight octets (depending on whether indications for one or both of the signing and protocol keys are concerned) and so allows a potential area reduction in the QR code or those octets to be used for another purpose. A commissioning device according to this embodiment reads the 'missing' indication as a flag that the signing key and/or the NAK must be of the same type as the public bootstrapping key in the URI.

Another way to save octets is to use a special indication for one or more sets of several curves, which sets are specified in a standard, e.g. an Internet draft, RFC, or a specification published by a standardization body such as the IEEE, Wi-Fi Alliance, NIST, ETSI, IEC, etc. As an example, the character A may have been specified as denoting all NIST curves P-256, P-384 and P-521 together with the Brainpool curves BP-256, BP-384 and BP-512. Using this example, the URI may become
*DPP:S:A;K:MDkwEwYHKoZIzj0CAQYIKoZIzj0DAQcDIgADM2206avxHJaHXgLMkq*/*24e0rsrfMP9K1T m8gx*+*ovP0I*=*;;* which indicates that the device supports all NIST curves P-256, P-384 and P-521 together with the Brainpool curves BP-256, BP-384 and BP-512 for signing and for the NAK.

Fig. 5a shows a computer readable medium 1000 having a writable part 1010 comprising a computer program 1020, the computer program 1020 comprising instructions for causing a processor system to perform one or more of the above methods and processes in the system as described with reference to Figs. 1-3. The computer program 1020 may be embodied on the computer readable medium 1000 as physical marks or by means of magnetization of the computer readable medium 1000. However, any other suitable embodiment is conceivable as well. Furthermore, it will be appreciated that, although the computer readable medium 1000 is shown here as an optical disc, the computer readable medium 1000 may be any suitable computer readable medium, such as a hard disk, solid state memory, flash memory, etc., and may be non-recordable or recordable. In an alternative, the computer readable medium may be located on remote server storage 1200 such as cloud storage. The computer program 1020 comprises instructions for causing a processor system to perform said methods.

Fig. 5c shows in a schematic representation of a processor system 1100 according to an embodiment of the device or methods as described with reference to Figs. 1-3. The processor system may comprise a circuit 1110, for example one or more integrated circuits. The architecture of the circuit 1110 is schematically shown in the Figure. Circuit 1110 comprises a processing unit 1120, e.g., a CPU, for running computer program components to execute a method according to an embodiment and/or implement its modules or units. Circuit 1110 comprises a memory 1122 for storing programming code, data, etc. Part of memory 1122 may be read-only. Circuit 1110 may comprise a communication element 1126, e.g., an antenna, a transceiver, connectors or both, and the like. Circuit 1110 may comprise a dedicated integrated circuit 1124 for performing part or all of the processing defined in the method. Processor 1120, memory 1122, dedicated IC 1124 and communication element 1126 may be connected to each other via an interconnect 1130, say a bus. The processor system 1110 may be arranged for wired and/or wireless communication, using connectors and/or antennas, respectively.

Since both commissioning device and enrollee device should be able to handle adapted messages, they must be programmed accordingly to parse the messages correctly. It should be understood that this adds complexity and lengthens the execution time for the commissioning device. There is also added complexity on the enrollee side in that more complicated firmware and larger non-volatile memory are required. It should be borne in mind that there is great downward price pressure on such devices and even apparently small additions demand justification. Furthermore, many such devices are batterypowered and any extra energy expenditure, such as retrieving information, composing more complex messages and sending those more complex and longer messages is actively discouraged, particularly where the batteries are small and intended to last a long time. Lastly, changing the protocol often involves other modifications to allow handling of legacy devices.

Aspects of the embodiments may be implemented in a computer program product, which may be a collection of computer program instructions stored on a computer readable storage device which may be executed by a computer. The instructions may be in any interpretable or executable code mechanism, including but not limited to scripts, interpretable programs, dynamic link libraries (DLLs) or Java classes. The instructions can be provided as complete executable programs, partial executable programs, as modifications to existing programs (e.g. updates) or extensions for existing programs (e.g. plugins). Moreover, parts of the processing of the present invention may be distributed over multiple computers or processors.

Storage media suitable for storing computer program instructions include all forms of non-volatile memory, including but not limited to EPROM, EEPROM and flash memory devices, magnetic disks such as the internal and external hard disk drives, removable disks and CD-ROM disks. The computer program product may be distributed on such a storage medium, or may be offered for download through HTTP, FTP, email or through a server connected to a network such as the Internet.

The following may be used as reference documents:
[802.11] IEEE Computer Society, "IEEE Standard for Information Technology-Telecommunications and Information Exchange Between Systems - Local and Metropolitan Area Networks - Specific requirements Part 11: Wireless LAN Medium Access Control (MAC) and Physical Layer (PHY) Specifications," (IEEE Std. 802.11-2016), December 2016
[DH] Diffie, W.; Hellman, M. (1976), "New directions in cryptography", IEEE Transactions on Information Theory, 22 (6): 644-654
[DPP] Device Provisioning Protocol - Technical Specification - Version 1.0, Wi-Fi Alliance, 2018, https://www.wi-fi.org/file-member/device-provisioning-protocol-specification.
[FIPS180-4] FIPS180-4, "Secure Hash Standard", United States of America, National Institute of Standards and Technology, Federal Information Processing Standard (FIPS) 180-4
[IKE] Internet Key Exchange (IKE) Attributes, Group Description (Value 4), https://www.iana.org/assignments/ipsec-registry/ipsec-registry.xhtml#ipsec-registry-10
[RFC 2409] RFC 2409, The Internet Key Exchange, November 1998, https://datatracker.ietf.org/doc/rfc2409/.
[RFC 5280] RFC 5280, Internet X.509 Public Key Infrastructure Certificate and Certificate Revocation List (CRL) Profile, https://datatracker.ietf.org/doc/rfc5280/
[RFC 5297] Synthetic Initialization Vector (SIV) Authenticated Encryption Using the Advanced Encryption Standard (AES), October 2008, https://datatracker.ietf.org/doc/rfc5297/.
[RFC 6090] RFC 6090, Fundamental Elliptic Curve Cryptography Algorithms, February 2011 https://datatracker.ietf.org/doc/rfc6090/.

## Claims

1. A method of configuring an enrollee device (4, 5) for communications in a wireless network (1) by execution of a configuration protocol, the method being arranged to be executed by a commissioning device (9) and an enrollee device (4, 5), the commissioning and enrollee devices being arranged to communicate using a wireless communication protocol and participate in the configuration protocol, the configuration protocol comprising
- providing by the enrollee device to the commissioning device, using an out-of-band (OOB) communication, a first public key and at least one indication of a type of a second public key;
- by the commissioning device, if the at least one indication of a type of a second public key indicates a type of key different from the type of the first public key,
making a selection of at least one type of key from the at least one indication, all types in the selection different from the type of the first public key,
sending a first message using the wireless communication protocol, the first message requesting second public key of a type corresponding to any key type in the selection, wherein the second key is used by the commissioning device to enable the enrollee device to connect to the wireless network
and/or
using a third key of a type corresponding to any key type in the selection to sign a data object, the data object being arranged to be sent to the enrollee and being arranged to be used by the enrollee device to attempt to connect to the wireless network;
- by the enrollee device if requested, sending a second message containing a second public key of a type of key requested in the first message;
- completing, by the enrollee and commissioning devices, the configuration protocol using a key or keys of the type(s) corresponding to the selection.

2. The method of claim 1 wherein, when the at least one indication of a type of second public key indicates a type of key the same as that of the first public key, the at least one indication uses a data element smaller than a data element used when the at least one indication of a type of a second public key indicates a type of key different from the type of the first public key.

3. The method of any of claims 1 or 2 comprising terminating before completion of the configuration protocol, by the commissioning device, of the execution of the configuration protocol when the at least one indication of a type of a second public key only indicates the same type as the type of the first public key.

4. The method of any of claims 1 or 2 comprising terminating before completion of the configuration protocol, by the commissioning device, of the execution of the configuration protocol when the at least one indication of a type of a second public key does not contain a type of public key that the commissioning device is enabled to use.

5. The method of any previous claim wherein the enrollee device (5) is a simple device.

6. The method of any previous claim wherein the configuration protocol is according the Device Provisioning Protocol (DPP).

7. An enrollee device (4, 5), arranged to communicate using a wireless communication protocol and arranged to be configured by a commissioning device (9) for communication in a wireless network, the enrollee device (4, 5) being arranged to:
- participate in a configuration protocol, the configuration protocol being arranged to configure the enrollee device (4, 5);
- provide, using an out-of-band (OOB) communication, a first public key for use in a first phase of the configuration protocol and at least one indication of a type of a second public key;
- participate, using the wireless communication protocol, with the commissioning device, in a commissioning protocol using the first public key and a key of a type indicated by the at least one indication;
- attempt to connect to a network (1) as a result of being configured.

8. The enrollee device of claim 7, arranged to decrypt a data object, the data object having been signed by the commissioning device using a key of a type corresponding to the at least one indication.

9. The enrollee device of claim 7 or 8, comprising a transceiver and being arranged to
- receive, via the transceiver and using the wireless communication protocol, a first message from a commissioning device, the first message containing a request indicating one or more type(s) of second public key, the type of second public key being different from the type of the first public key;
- send, via the transceiver and using the wireless communication protocol a second message to the commissioner device, the second message containing a second public key of the type requested in the message.

10. The enrollee device of claim 9 being arranged to provide a second public key of a type having the greatest cryptographic strength when the request indicates more than one type of public key.

11. The enrollee device (4, 5) of any of claims 7 - 10 wherein the enrollee device is a simple device.

12. A device arranged to act as a commissioning device (9) and being arranged to configure an enrollee device (4, 5) for communication in a wireless network, the device comprising a transceiver arranged for transceiving according to a wireless communication protocol, the device being arranged to
- participate in a configuration protocol;
- obtain, from the enrollee device, via an out-of-band (OOB) communication, a first public key and at least one indication of a second type of public key to be used as part of the configuration protocol;
- if the at least one indication indicates a type of key different from the type of the first public key,
make a selection of at least one type of key based on the at least one indication, all types in the selection being different from the type of the first public key,
send a first message, using the transceiver and the wireless communication protocol, to the enrollee device requesting a second public key of a type of key corresponding to any key type in the selection and/or
use a third key of a type corresponding to any key type in the selection to sign a data object and to send, via the transceiver and using the wireless communication protocol, the signed data object to the enrollee, the data object being arranged to be used by the enrollee device to attempt to connect to the wireless network.

13. The device of claim 12 being arranged to terminate before completion the configuring of the enrollee device if the indication indicates only the same type of key as the type of key of the first public key.

14. The device of claim 12 being arranged to terminate before completion the configuring of the enrollee device if the at least one indication does not indicate a type of key the device is enabled to use.

15. A computer program product when operated on a processor in an enrollee device causes the enrollee device to execute the method of any of claims 1 - 6.

16. A computer program product when operated on a processor in a commissioning device causes the commissioning device to execute the method of any of claims 1 - 6.
